# EUROPÄISCHE PATENTSCHRIFT

(11) **EP 2 880 642 B1**
(45) Veröffentlichungstag und Bekanntmachung des Hinweises auf die Patenterteilung: **03.01.2018**
(21) Anmeldenummer: 13734095.6
(22) Anmeldetag: 05.07.2013
(51) Int. Cl.: G07F 17/32

(54) **UNTERHALTUNGSSPIELGERÄT**
GAMING MACHINE
APPAREIL DE DIVERTISSEMENT

(30) Priorität: 03.08.2012 DE 102012107132
(43) Veröffentlichungstag der Anmeldung: 10.06.2015
(73) Patentinhaber: Novomatic AG, 2352 Gumpoldskirchen (AT)
(72) Erfinder: FAUL, Thomas, 67659 Kaiserslautern (DE); LUFT, Michael Rudolph, 64297 Darmstadt (DE)
(86) Internationale Anmeldenummer: PCT/EP2013/064229
(87) Internationale Veröffentlichungsnummer: WO 2014/019801

(56) Entgegenhaltungen:
- WO-A2-2007/117418
- US-A- 5 429 507
- US-A1- 2004 053 671
- US-A1- 2010 295 820
- US-A1- 2011 306 416
- US-A1- 2012 105 333

## Beschreibung

Die Erfindung bezieht sich auf ein Unterhaltungsspielgerät mit einem Gehäuse, in dem eine Spielablaufsteuerung, mindestens eine Anzeigeeinrichtung zur Darstellung einer Spieleinrichtung und mindestens ein durch einen Benutzer betätigbares Schaltelement, das mit der Spielablaufsteuerung in Verbindung steht, angeordnet sind.

Die US 2004/0053671 A1 offenbart ein Unterhaltungsspielgerät mit einem Gehäuse, in dem eine Spielablaufsteuerung, mindestens eine Anzeigeeinrichtung zur Darstellung einer Spieleinrichtung und mindestens ein durch einen Benutzer betätigbares Schaltelement, das mit der Spielablaufsteuerung in Verbindung steht, angeordnet sind. Ein weiteres derartiges Unterhaltungsspielgerät offenbart die WO 2007/117 418 A2, wobei das Unterhaltungsspielgerät unterschiedlich betätigbare Aktuatoren aufweist, die in Abhängigkeit von dem Spielverlauf in Vibration versetzt werden können. Aus der US 2011/030 416 A1 ist es ebenfalls bekannt, in Abhängigkeit von einem bestimmten Spielverlauf eine Drucktaste in Vibration zu versetzten. Darüber hinaus beschreibt die US 2012/0105333 A1 die Ansteuerung eines elastischen Bildschirms in einer für einen Benutzer haptisch wahrnehmbaren Art und Weise.

Unterhaltungsspielgeräte, die im Rahmen der Erfindung zum Einsatz kommen, sind in der Regel geldbetätigt und in den verschiedensten Ausführungsformen bekannt. Oftmals besitzen solche Unterhaltungsgeräte eine oder mehrere Spieleinrichtungen. Am häufigsten umfassen sie eine Symbol-Spieleinrichtung, bei der mit Umlaufkörpern hinter Ablesefenstern einen Gewinn oder Verlust angebende Symbolkombinationen angezeigt werden. Die Symbol-Spieleinrichtung kann Walzen und/oder Scheiben umfassen oder auf einem Bildschirm bedarfsweise dargestellt werden. In unterschiedlicher Höhe werden Geld- und/oder Punkte- und/oder Sonderspielgewinne mit gegenüber dem Normalspiel
erhöhter Gewinnchance oder dergleichen in Aussicht gestellt oder gegeben.

Meistens besitzen geldbetätigte Unterhaltungsspielgeräte mindestens eine aus mehreren gewinnindividuellen Anzeigefeldern bestehende Zusatzspieleinrichtung, in der ein in der Symbol-Spieleinrichtung erreichtes Spielergebnis ausgespielt oder kumuliert wird. Eine solche Zusatzgewinn-Spieleinrichtung kann beispielsweise eine Risiko-Spieleinrichtung sein, bei der eine Entscheidung über Erhöhung oder Totalverlust des eingesetzten Gewinns erfolgt. Darüber hinaus ist es bei Unterhaltungsspielgeräten bekannt, den erzielten Gewinn mittels einer als Zusatzspieleinrichtung ausgebildeten Ausspieleinrichtung zu erhöhen oder zu erniedrigen. Einen weiteren Spielanreiz mit zusätzlicher Gewinnmöglichkeit stellt eine Zusatzspieleinrichtung in Form einer Jackpot-Spieleinrichtung dar, in der ein zusätzlicher Gewinn ausgelöst werden kann.

Sämtliche vorgenannten Spieleinrichtungen verfügen über Symbole, die in bestimmten Kombinationen, die beispielsweise auf einem Gewinnplan dargestellt sind, mit einem Gewinn in Form von Geld und/oder Punkten verbunden sind. Im Weiteren können insbesondere auf modernen Bildschirmgeräten Hintergrundbilder dargestellt werden und darüber hinaus ist das Spielgeschehen durch Musik bzw. besondere Tonfolgen begleitet, die in dem Unterhaltungsspielgerät systemspezifisch gespeichert ist, bzw. sind.

Bei einem aus der Praxis bekannten Unterhaltungsspielgerät ist es bekannt, Schaltmittel, beispielsweise zur Beeinflussung eines Spielablaufs, zur Auswahl oder zum Start eines Spiels oder dergleichen, entweder als berührungsempfindliche Sensorfelder in einen Bildschirm des Unterhaltungsgerätes zu integrieren oder als Schalter mit mechanischen Schaltelementen in einem Gehäuse des Unterhaltungsspielgerätes unterzubringen, vorzugsweise in einem mehrere Schalter umfassenden Bedientableau. Selbstverständlich stehen sämtliche Schaltmittel mit einer Spielgerätesteuerung in Verbindung. Damit ein Spieler zum Betätigen entsprechender Schalter, beispielsweise in Abhängigkeit von einem Spielverlauf, animiert wird, sind die Schaltmittel, vorzugsweise deren Bedienelemente, insbesondere Drucktasten, hinterleuchtbar, wobei die Beleuchtungselemente natürlich auch über die Spielgerätesteuerung aktiviert bzw. deaktiviert werden. Im Weiteren ist es in diesem Zusammenhang bekannt, ein betätigtes Schaltmittel zu beleuchten, um dem Benutzer des Unterhaltungsspielgerätes einen Hinweis auf den Schaltzustand des Schaltmittels zu geben. Demnach erhält der Benutzer des Unterhaltungsspielgerätes stets eine optische wahrnehmbare Information bezüglich getätigter oder möglicher Schaltzustände eines Schaltmittels durch dessen Beleuchtung.

Des Weiteren ist es bekannt, den Schaltmitteln beispielsweise Rasteinrichtungen zuzuordnen, die dem Benutzer des Unterhaltungsspielgerätes einen haptisch wahrnehmbaren Hinweis liefern, dass das Schaltmittel verdreht oder gedrückt wurde.

Die dem Benutzer vermittelten Informationen sind verhältnismäßig einfach und beschränken sich in der Regel auf die Mitteilung, ob ein Schaltvorgang erfolgte oder nicht.

Die DE 10 2007 002 933 A1 offenbart einen elektronischen Spiel- und/oder Wettautomaten mit einer einen ersten und einen zweiten Bildschirm aufweisenden Anzeigevorrichtung, auf denen eine erste Bildschirmdarstellung und eine zweite Bildschirmdarstellung anzeigbar sind und einem Bedienfeld zur Betätigung des Spiel- und/oder Wettautomaten. Es ist eine Umschaltvorrichtung, die durch eine Eingabeeinrichtung von einem Benutzer betätigbar ist, zum Umschalten der ersten Bildschirmdarstellung von dem ersten Bildschirm auf den zweiten Bildschirm sowie der zweiten Bildschirmdarstellung von dem zweiten Bildschirm auf den ersten und/oder umgekehrt vorgesehen. Die Eingabeeinrichtung kann eine Betätigungstaste zum Betätigen der Umschalteinrichtung durch Tastendruck, Berührung und/oder Annäherung aufweisen, wobei auf eine von dem Benutzer üblicherweise betätigte Spielsteuertaste ein Vibrationsalarm gegeben werden kann, der beim Umschalten von Bildschirmdarstellungen abgegeben wird.

Des Weiteren zeigt die US 5 429 507 A ein rechnergesteuertes Unterhaltungsspielgerät für schlecht sehende oder blinde Benutzer, das aktualisierbare Blindenschrift-Stifte verwendet, um die von dem Unterhaltungsspielgerät angezeigten Symbole darzustellen, wobei die Blindenschrift-Stifte jeweils mittels eines Elektromagneten vertikal und unabhängig voneinander bewegt werden. Auch wird der Hinweis zum Starten des Unterhaltungsspielgerätes durch eine bestimmte Stellung der Blindenschrift-Stifte gegeben.

Ferner beschreibt die US 2010/016 0016 A1 ein Unterhaltungsspielgerät mit mindestens einem Bedienelement, das beim Auftreten eines besonderen Spielereignisses, wie z. B. ein Wechsel in den Spielregeln, in Vibration versetzt wird, um dem Benutzer einen entsprechenden Hinweis zu geben. Das Bedienelement ist mit einer elektromagnetischen Spule verbunden, die auf eine nicht ausgewuchtete Masse zur Erzeugung der Vibration einwirkt.

Der Erfindung liegt die Aufgabe zugrunde, ein Unterhaltungsspielgerät der eingangs genannten Art zu schaffen, das über eine Benutzerschnittstelle haptisch bzw. taktil wahrnehmbar mit einem Benutzer kommuniziert.

Erfindungsgemäß wird die Aufgabe durch die Merkmale des Anspruchs 1 gelöst.

Die Unteransprüche stellen vorteilhafte Ausgestaltungen der Erfindung dar.

Ein Unterhaltungsspielgerät umfasst ein Gehäuse, in dem eine Spielablaufsteuerung, mindestens eine Anzeigeeinrichtung zur Darstellung einer Spieleinrichtung und mindestens ein durch einen Benutzer betätigbares Schaltelement angeordnet sind, wobei das Schaltelement mit der Spielablaufsteuerung in Verbindung steht und dem als Dreh-, Druck-, Zug- oder Tast-Schalter oder als eine Kombination dieser Schalter ausgebildeten Schaltelement mindestens eine mit der Spielablaufsteuerung gekoppelte, zumindest eine Spule aufweisende elektromagnetische Einrichtung zugeordnet ist, wobei die elektromagnetische Einrichtung bei einer Betätigung des Schaltelementes eine für den Benutzer taktil erfassbare Information in Abhängigkeit des Spielverlaufs bezüglich eines Schaltvorgangs in Form einer Lage- und Formänderung des Schaltelementes erzeugt,
- wobei zur Lage- und Formänderung eines Betätigungselementes des Schaltelements das Betätigungselement zumindest bereichsweise aus einem elastischen Werkstoff gefertigt ist, wobei der Magnetstab der elektromagnetischen Einrichtung zur Veränderung der Form des Betätigungselements in den elastischen Werkstoff eingebettet ist und wobei der Magnetstab sowohl verdrehbar als auch axial verlagerbar in der Spule der elektromagnetischen Einrichtung angeordnet ist.

Nach einer Weiterbildung erzeugt die elektromagnetische Einrichtung bei einer Betätigung des Schaltelementes eine für einen Benutzer taktil erfassbare Information in Form einer Vibration oder einer Änderung eines Betätigungswiderstandes.

Neben den bislang aus dem Stand der Technik bekannten Möglichkeiten, dem Benutzer des Unterhaltungsspielgerätes optisch bzw. akustisch oder taktil wahrnehmbare Informationen zu dem Unterhaltungsspielgerät zu vermitteln, ist es nach der Erfindung auch möglich, beim Angreifen und/oder Betätigen des Schaltelementes spielverlaufsabhängige Informationen für den Benutzer bereitzustellen, beispielsweise eine Vibration, einen veränderbaren Betätigungswiderstand oder dergleichen, wobei elektromagnetische Einrichtung, die insbesondere als eine Vibrationseinrichtung, eine Bremse ein Motor oder dergleichen ausgebildet ist, mit der Spielablaufsteuerung kommuniziert, die zu jeder Zeit, in der das Unterhaltungsspielgerät aktiv ist, egal ob ein Spiel abläuft oder nicht, eine entsprechende taktil bzw. haptisch erfassbare Aktion des Schaltelementes hervorrufen kann, indem eine Ansteuerung der elektromagnetischen Einrichtung erfolgt. Da die elektromagnetische Einrichtung in Abhängigkeit des Spielverlaufs ansteuerbar ist, erhält der Benutzer taktil erfassbare Informationen, ohne seinen Blick von dem eigentlichen Spielgeschehen abwenden zu müssen. Selbstverständlich ist es möglich, die unterschiedlichen taktilen Informationen nicht nur separat, sondern auch in Kombination bereitzustellen. Beispielsweise kann ein flexibles Betätigungselement des Schaltelementes sowohl in der Form verändert, in dem Erhebungen/Vertiefungen erzeugt werden, als auch durch einen Vibrator in

Schwingungen versetzt werden. Unterstützt werden kann diese Art der Information durch ein akustisch wahrnehmbares Geräusch, beispielsweise ein Brummton oder Pfeifen, das gleichzeitig mit der Ansteuerung der elektromagnetischen Einrichtung durch einen ohnehin an dem Unterhaltungsspielgerät vorhandenen Lautsprecher abgegeben wird.

Die elektromagnetische Einrichtung bewirkt eine Veränderung der Lage und Form eines Betätigungselementes des Schaltelements. Angesteuert durch die Spielablaufsteuerung kann das Betätigungselement des Schaltelementes mittels des Schrittmotors in eine beliebige oder anforderungsabhängige Richtung gedreht bzw. verlagert werden, um entweder den Benutzer des Unterhaltungsspielgerätes in einer bestimmten Spielsituation zu einer erwünschten Handlung zu bewegen oder beim Betätigen des Betätigungselementes eine der Betätigungsrichtung entgegengesetzte Kraft zu erzeugen. Die von der Spielablaufsteuerung mittels der elektromagnetischen Einrichtung bewirkte Lage- und Formveränderung des Betätigungselementes kann auch zur Anleitung eines Benutzers außerhalb des eigentlichen Spiels, beispielsweise in Pausen oder in einem Demonstrations-Modus, erfolgen.

Gemäß der Erfindung ist das Betätigungselement des Schaltelements zumindest bereichsweise aus einem elastischen Werkstoff, vorzugsweise einem Silikon, gefertigt und die elektromagnetische Einrichtung derart ausgebildet, dass sie die Form des Betätigungselements verändert. Sind der elektromagnetischen Einrichtung entsprechende Aktoren zugeordnet, kann das Betätigungselement, beispielsweise in Abhängigkeit von dem Spielgeschehen, z. B. dreieckig, viereckig, rund, kugelförmig oder dergleichen sein, um den Benutzer auf eine Veränderung des Spiels durch die Formänderung aufmerksam zu machen. Gemäß einer nicht von der Erfindung erfassten Ausgestaltung kann das als ein flexibler Touchscreen ausgebildete Betätigungselement in seiner Form verändert werden, in dem beispielsweise erhabene und/oder muldenartig vertiefte Bereiche geschaffen werden, wenn ein mit einer Spule gekoppelter und an der zu bewegenden Oberfläche anliegender oder befestigter Anker bewegt wird.

Zweckmäßigerweise ist mittels der elektromagnetischen Einrichtung eine Betätigungsrichtung und/oder Stellung des Betätigungselementes erfassbar. Hierzu können beispielsweise Hall-Sensoren vorgesehen werden oder eine elektrische Änderung der elektromagnetischen Einrichtung, beispielsweise eines Schrittmotors oder einer elektromagnetischen Spule wird entsprechend erfasst und ausgewertet. Wobei die Erfassung und Auswertung der Daten beispielsweise seitens der Spielablaufsteuerung oder eines separaten Rechnermoduls erfolgen kann.

Zweckmäßigerweise bewirkt die als Schrittmotor oder eine Bremse ausgebildete elektromagnetische Einrichtung einen sich erhöhenden oder erniedrigenden Widerstand gegen eine Betätigung des Schaltelementes. Die als Bremse oder Motor ausgebildete Einrichtung kann beispielsweise an einer Schaltachse des Schaltelementes der angreifen, um der Betätigungsrichtung entgegenzuwirken. Selbstverständlich kann sie auch eine Betätigungswippe eines Wippschalters an deren Trägerachsstummeln in der Schwenkbewegung beeinflussen. Im Weiteren ist es möglich, das Betätigungselement mittels des Schrittmotors sowohl unterstützend als auch selbsttätig zu bewegen. Wird die Betätigung des Schaltelementes mittels eines Sensors, dessen Daten auswertbar, beispielsweise an der Spielablaufsteuerung vorliegen, überwacht kann auch die Schaltstellung als zusätzliche Information verarbeitet und dem Benutzer taktil erfassbar zurückgemeldet werden. Insbesondere ist es möglich, bei einem als Geld-Gewinnspielgerät ausgebildeten Unterhaltungsspielgerät einen sich erhöhenden oder erniedrigenden Widerstand gegen eine Betätigung des Schaltelementes zu erzeugen, wenn ein Gewinn- oder Verlustrisiko besteht, um den Benutzer auch über eine fühlbare Wahrnehmung auf eine besondere Spielsituation aufmerksam zu machen.

Selbstverständlich können dem als Dreh-, Druck-, Zug- oder Tast-Schalter oder als eine Kombination dieser Schalter ausgebildeten Schaltelement neben entsprechenden Mikro-Controllern auch alle benötigten Sensoren und Aktuatoren zugeordnet werden, um eine kompakte Baueinheit zu bilden.

In Ausgestaltung ist die Vibration in ihrer Intensität veränderbar. Die entsprechende Steuerung erfolgt seitens der Spielablaufsteuerung rechnergesteuert. Die Vibration lässt sich selbstverständlich im Zusammenhang mit jedem beliebigen Schaltelement verwenden, um den Benutzer für eine Spielsituation zu sensibilisieren. Zweckmäßigerweise ist das Schaltelement oder ein Betätigungselement und/oder ein Sensorfeld schwingend gelagert oder ausgebildet. Das Schaltelement oder Betätigungselement des Schalters kann mit Spiel gelagert sein oder zumindest bereichsweise elastisch ausgeführt oder flexibel gelagert sein, damit es in eine für den Benutzer wahrnehmbare Vibration versetzt werden kann.

Nach einer Weiterbildung umfasst die die Vibration erzeugende elektromagnetische Einrichtung einen Dauermagneten und eine erregbare Spule, wobei der eine Teil der Einrichtung gehäusefest und der andere relativ dazu beweglich an dem in Vibration zu versetzenden Bauteil angeordnet ist, wobei der dem Schaltelement zugeordnete Magnetstab sowohl verdrehbar als auch axial verlagerbar in der Spule angeordnet ist.

Um auch optisch wahrnehmbare Informationen für den Benutzer unmittelbar an dem Schaltelement bereitzustellen, sind dem Schaltelement ansteuerbare Beleuchtungsmittel zugeordnet. Beispielsweise können sogenannte RGB-Leuchtdioden vorgesehen werden, die mit der Spielablaufsteuerung mittelbar oder unmittelbar gekoppelt in Abhängigkeit vom Spielverlauf oder dergleichen ihre Farbe ändern.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrerer Ausführungsbeispiele unter Bezugnahme auf die zugehörige Zeichnung näher erläutert. Es zeigt:

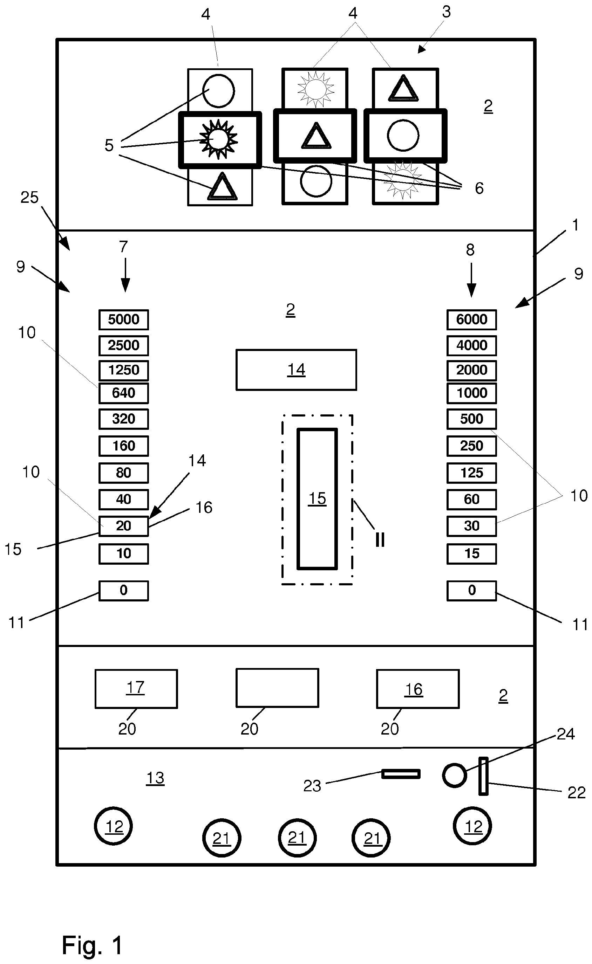

- Fig. 1: eine schematische Darstellung einer Vorderansicht eines erfindungsgemäßen Unterhaltungsspielgerätes,
- Fig.2: eine schematische Darstellung eines Schaltelementes gemäß einer Einzelheit II nach Fig. 1, das nicht von der Erfindung umfasst ist,
- Fig.3: eine schematische Teildarstellung des Schaltelementes in alternativer Ausgestaltung,
- Fig.4: eine schematische Teildarstellung des Schaltelementes in weiterer alternativer Ausgestaltung,
- Fig.5: eine Vorderansicht eines alternativen Unterhaltungsspielgerätes nach der Erfindung,
- Fig.6: eine schematische Darstellung eines Schaltelementes gemäß einer Einzelheit VI nach Fig. 5, das nicht von der Erfindung umfasst ist,
- Fig.7: eine Schnittdarstellung gemäß der Linie VII-VII nach Fig. 6, das nicht von der Erfindung umfasst ist,
- Fig.8: eine schematische Darstellung eines Schaltelementes gemäß einer Einzelheit VIII nach Fig. 5,
- Fig.9: eine schematische Darstellung eines Schaltelementes gemäß einer Einzelheit IX nach Fig. 5,
- Fig. 10: eine schematische Darstellung des Schaltelementes gemäß Fig. 9 in alternativer Ausgestaltung und
- Fig. 11: eine schematische Darstellung eines alternativ ausgestalteten Schaltelementes.

Das Gehäuse 1 des geldbetätigten, rechnergesteuerten Unterhaltungsgerätes mit Gewinnmöglichkeit weist auf seiner Vorderseite drei übereinander angeordnete Bildschirme 2 auf, von denen der obere

Bildschirm 2 zur Darstellung einer Spieleinrichtung 3 dient, die in Form einer Symbolspieleinrichtung mit drei nebeneinander angeordneten, walzenförmig ausgebildeten Umlaufkörpern 4 optisch dargestellt ist. Durch eine Spielablaufsteuerung wird rechnergesteuert ein Bild erzeugt, das sich drehenden Umlaufkörpern 4 mit umfangsseitigen Symbolen 5 entspricht. Im Weiteren werden rechnergesteuert Ablesefenster 6 auf dem Bildschirm 2 dargestellt, die der Anzeige eines zufallsgesteuerten Spielergebnisses, also einer bestimmten Kombination von Symbolen 5, dienen. Mit der Darstellung des Spielergebnisses geht eine Anzeige der virtuellen Umlaufkörper 4 einher, die stillgesetzten Walzen entspricht. Aus den angezeigten Symbolen 5 kann der Benutzer das Spielergebnis ablesen, insbesondere auch, ob ein Gewinn nach einem anzeigbaren Gewinnplan vorliegt.

Der Bildschirm 2 in der Mitte des Unterhaltungsgerätes ist als Touchscreen 25 ausgebildet und dient zur Darstellung von als Risikoleitern 7, 8 ausgebildeten Zusatzspieleinrichtungen 9. Der in der Spieleinrichtung 3 durch Erreichung einer zufallsgesteuert ermittelten Symbolkombination erzielte Gewinn kann tasten- oder rechnergesteuert als Einsatz in eine der beidseitig des mittigen Bildschirms 2 angeordneten Zusatzspieleinrichtungen 9 übertragen werden. Die linke Risikoleiter 7 umfasst mehrere übereinander dargestellte Anzeigefelder 10, die in steigender Reihenfolge mit Gewinnwerten von 10 bis 5000 Punkten belegt sind. Die rechte Risikoleiter 7 besitzt ebenfalls mehrere übereinander dargestellte Anzeigefelder 10, die in steigender Reihenfolge mit Gewinnwerten von 15 bis 6000 Punkten belegt sind.

Das Riskieren des in der Risikoleiter 7 bzw. 8 angezeigten Gewinns geschieht dadurch, dass das nächst höhere Anzeigefeld 10 in Bezug auf das optisch hervorgehobene, den Gewinn anzeigende Anzeigefeld 10 im Wechsel mit einem unterhalb der Risikoleiter 7 bzw. 8 angebrachten Totalverlustanzeigefeld 11 mit der Beschriftung "0" blinkend dargestellt wird. Bei Betätigung einer als Drucktaste ausgebildeten Taste 12, die in einem unteren Gehäuseabschnitt 13 angeordnet ist, wird zufallsgesteuert entweder der nächst höhere Gewinn erzielt oder der eingesetzte Gewinn verloren. Dieser Vorgang kann bis zum Erreichen des dargestellten Höchstgewinnes an Punkten fortgesetzt werden.

Zwischen den beiden Risikoleitern 7, 8 ist eine Jackpotanzeige 14 vorgesehen, die Bestandteil einer dem Fachmann bekannten Jackpot-Einrichtung ist und zur Anzeige von Punkten dient, die in Abhängigkeit von einem erreichten Spielergebnis erzielt werden. Im Weiteren ist ein Sensorfeld 15 ausgebildet, das mit der Spielablaufsteuerung gekoppelt ist und bei einem Überstreichen durch einen Benutzer einen Schaltvorgang auslöst.

Der untere Bildschirm 2 ist mit Anzeigen 20 für Guthaben, Punkte, Gewinne und dergleichen versehen, wobei eine der Anzeigen 20 eine Punktebank 16 repräsentiert. Bei einem Guthaben in einer als Guthabenanzeige 17 ausgeführten Anzeige 20 wird ein bestimmter Geldbetrag aus der Guthabenanzeige 17 in eine bestimmte Punkteanzahl umgewandelt und in der Punktebank 16 aufaddiert, von der eine bestimmte Punktezahl als Einsatz für ein Spiel in der Spieleinrichtung 3 abgebucht und in der in der Spieleinrichtung 3 gewonnene Punkte aufaddiert werden. Bei einer Auszahlung eines Geldwertes wird zunächst der Punktewert der Punktebank 16 in ein in der Guthabenanzeige 17 dazustellendes Guthaben in einem vorgegebenen Zeittakt umgewandelt.

Im unteren Gehäuseabschnitt 13 des Unterhaltungsgerätes sind als Drucktasten 21 ausgebildete Nachstart-/ Stopptasten angeordnet. Mit deren Beaufschlagung das in der Spieleinrichtung 3 angezeigte Symbol 5 des zugeordneten Umlaufkörpers 4 nachgestartet bzw. vorzeitig stillgesetzt werden kann, d. h. die Anzeige derart beeinflusst wird, dass die Umlaufkörper 4 stillstehend oder rotierend erscheinen. Ferner sind ein Münzeinwurfschlitz 22 und ein Geldscheineingabeschlitz 23 einer nicht näher dargestellten Geldverarbeitungseinrichtung vorgesehen. Des Weiteren ist neben dem Münzeinwurfschlitz 22 eine Rückgabetaste 24 angeordnet, durch deren Betätigung ein in der Guthabenanzeige 20 angezeigtes Guthaben in eine nicht dargestellte Ausgabeschale abrufbar ist.

Die Taste 12 und/oder die Drucktaste 21 und/oder das Sensorfeld 15 bzw. der komplette Touchscreen 25 ist jeweils als ein Schaltelement 26 ausgebildet, dem eine elektromagnetische Einrichtung 27 zugeordnet ist.

Die elektromagnetische Einrichtung 27 ist beispielsweise als eine Bremse ausgebildet, die eine zur Beaufschlagung des jeweiligen Betätigungselementes 28 erforderliche Kraft verändert oder als Vibrationseinrichtung 29 eine entsprechende haptische/taktile Wahrnehmbarkeit des Schaltvorganges durch einen Benutzer ermöglicht.

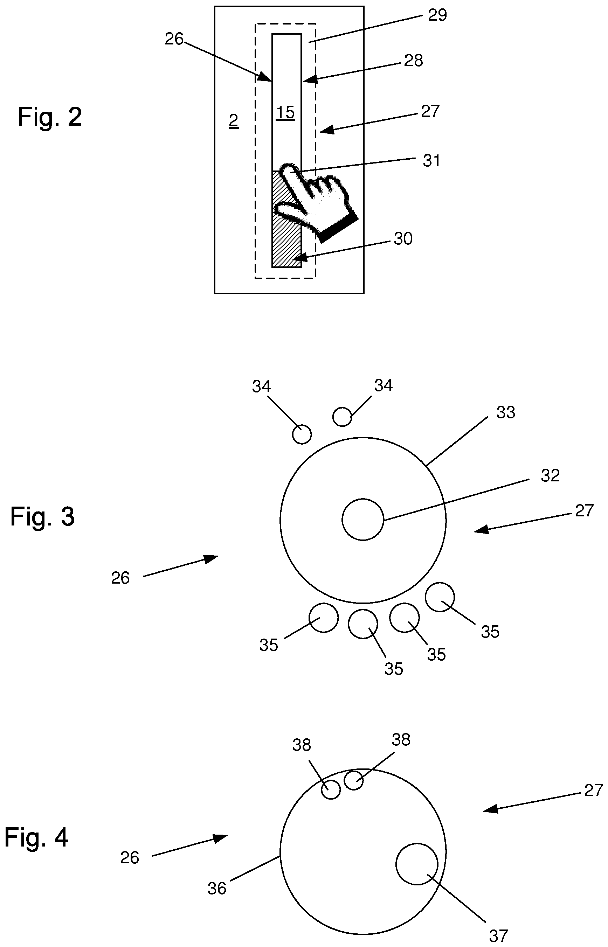

Wie in Fig. 2 gezeigt sind dem Schaltelement 26 ansteuerbare Beleuchtungsmittel 30 zur Darstellung einer Art Balkenanzeige zugeordnet. Streicht der Benutzer für eine spielabhängige Eingabe mit seinem Finger 31 über das längliche Sensorfeld 15 des Schaltelements 26, dann erhält er über die sich in ihrer Lage verändernde Balkenanzeige und/oder einen gegebenenfalls erfolgenden Farbwechsel der der Balkenanzeige zugeordneten Beleuchtungsmittel 30 sowie eine von der Vibrationseinrichtung 29 erzeugte Vibration, die er mit seinem auf dem Bildschirm 2 aufliegenden Finger 31 wahrnimmt, eine Rückmeldung über seine Aktion.

Zur Erfassung einer Drehrichtung oder einer Drehrichtungsänderung oder zur Erzeugung einer Drehbewegung umfasst die elektromagnetische Einrichtung 27 des als Drehschalter ausgebildeten Schaltelements 26 nach Fig. 3 einen Dauermagneten 32 in Zentrum einer mit einer Außenverzahnung versehenen Eisenscheibe 33, wobei der Dauermagnet und die Eisenscheibe 33, die auch als eine verzahnte Welle ausgeführt sein kann, Bestandteil einer mit einem Betätigungselement des Schaltelements 26 gekoppelten Schaltachse, die mit Schaltkontakten zusammenwirken kann, sind. Dem peripheren Umfang der Eisenscheibe 33 sind zwei zueinander beabstandete Hall-Sensoren 34 zugeordnet, die mit einem nicht dargestellten Mikro-Controller des Schaltelements 26 und darüber hinaus mit der übergeordneten Spielablaufsteuerung des Unterhaltungsspielgeräts verbunden sind. Im Weiteren sind dem äußeren Umfang der Eisenscheibe 33 mehrere elektromagnetische Erreger 35 zur Erzeugung eines wandernden Magnetfeldes zugeordnet, die ebenfalls mit dem Mikro-Controller gekoppelt sind. Aufgrund der Signale der Hall-Sensoren 34 ist nach einer entsprechenden Signalauswertung eine Drehrichtungserkennung möglich. Das von den Erregern 35 erzeugte magnetische Wanderfeld bewirkt eine Drehung der Eisenscheibe 33 und des damit verbundenen Betätigungselementes, wodurch mindestens ein entsprechender Schaltvorgang ausgelöst wird.

Gemäß Fig. 4 ist die elektromagnetische Einrichtung 27 des als Drehschalter ausgebildeten Schaltelements 26 zur Erfassung einer Drehrichtung oder einer Drehrichtungsänderung oder zur Erzeugung einer Drehbewegung im Wesentlichen aus einem Drehkörper 36 mit einer Innenverzahnung, einem mit der Innenverzahnung zusammenwirkenden Motor 37 und die Verzahnung detektierenden Sensoren 38 zusammengesetzt, wobei selbstverständlich sämtliche vorgenannten Bauteile gemeinsam mit einem Mikro-Controller zur Signalauswertung und Steuerung in einem Schaltergehäuse untergebracht sein können. Die der Innenverzahnung zugeordneten Sensoren 38 erfassen eine Drehwinkeländerung des Drehkörpers 36 und damit des mit dem Drehkörper 36 verbundenen Betätigungselements des Schaltelements 26, woraus eine Position bzw. Positionsänderung des Drehkörpers 36 um eine Schaltachse ermittelt werden kann. Der Motor 37 kann zum einen den Drehkörper 36 antreiben, um einen Schaltvorgang auszuführen oder er liefert durch den aufgrund einer Drehung des Drehkörpers 36 bzw. des Betätigungselements des Schaltelements erzeugten Stroms eine Information bezüglich der Drehbewegung.

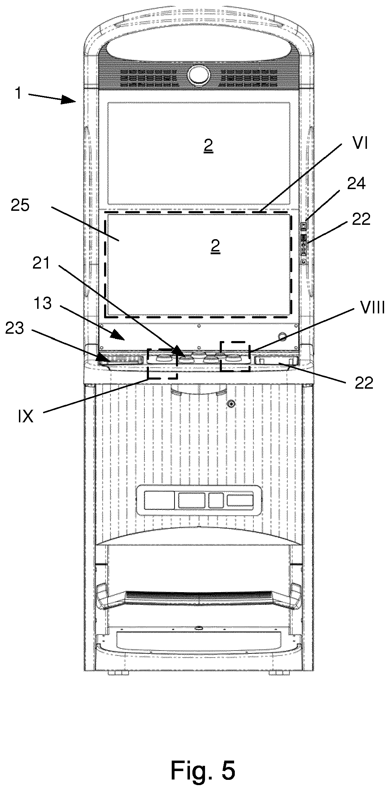

In alternativer Ausgestaltung gemäß Fig. 5 umfasst das Gehäuse 1 des geldbetätigten, rechnergesteuerten Unterhaltungsgerätes zwei übereinander angeordnete Bildschirme 2 als Anzeigeeinrichtungen 49, von denen der obere Bildschirm 2 zur Darstellung von spielbezogenen Informationen und der untere zur Darstellung einer Spieleinrichtung dient. In dem Gehäuseabschnitt 13 unterhalb des unteren Bildschirms 2, der als Touchscreen 25 ausgebildet ist, sind unter anderem Drucktasten 21 und weitere Schaltelemente 26 angeordnet.

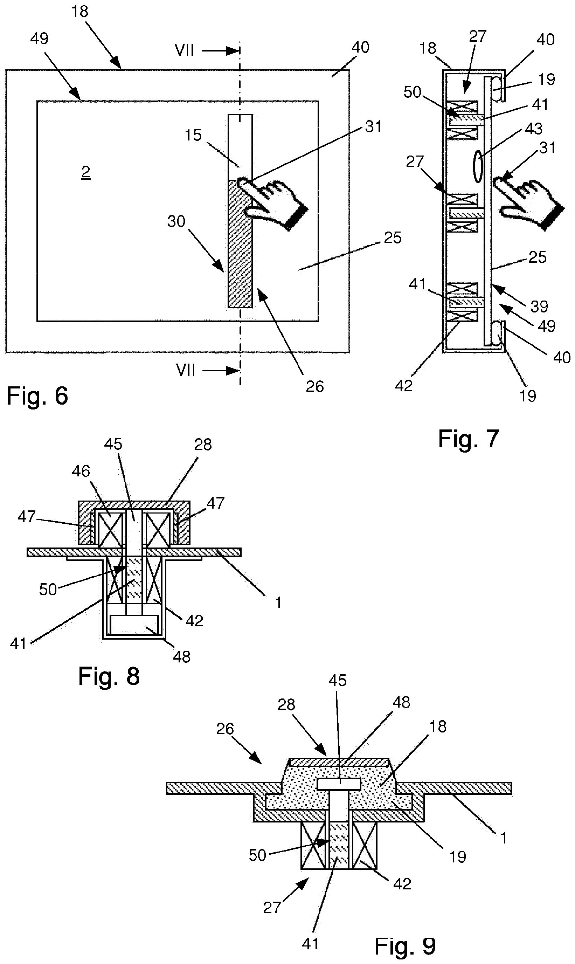

Entsprechend Fig. 6 und Fig. 7 ist der Touchscreen 25 in einem gehäusefesten umlaufenden Rahmen 18 federnd gelagert, wobei ein elastischer Werkstoff 19, beispielsweise ein elastomerer Kunststoff, vorzugsweise ein Silikon, zwischen einer leitfähig beschichteten Frontplatte 39 des Touchscreen 25, die beispielsweise aus Glas besteht, und einem die Frontplatte 39 randseitig übergreifenden Rahmenschenkel 40 angeordnet ist. An der dem Benutzer abgewandten Seite der Frontplatte 39 sind über das längliche Sensorfeld 15 des Schaltelements 26 verteilt mehrere Dauermagnete 50 umfassende Magnetstäbe 41 der als Vibrationseinrichtung 29 ausgebildeten elektromagnetischen Einrichtung 27 stirnseitig, beispielsweise mittels kleben, befestigt und tauchen in elektromagnetische Spulen 42 ein, die zur Ansteuerung mit der Spielablaufeinrichtung gekoppelt sind. Aufgrund der Verteilung der Vibrationseinrichtungen 29, die zur optischen Darstellung der Balkenanzeige, gegebenenfalls mit einem Farbwechsel, auch in Kombination mit den Beleuchtungsmitteln 30 installiert sein kann, sowie der unterschiedlichen Intensitäten und/oder Frequenzen, mit denen durch die Erregung der Spulen 42 Schwingungen erzeugt werden, erhält der Benutzer mit seinem auf dem Bildschirm 2 aufliegenden Finger 31 eine Rückmeldung über seine Aktion.

Der Hub der Magnetstäbe 41 gegenüber den zugeordneten Spulen 42 der Vibrationseinrichtungen kann ca. 0,05mm bis 0,2mm betragen, wobei die Spulen 42 in Reihe geschaltet und durch MosFet-Transistor-Endstufen bei einem Energiebedarf von ca. 1W angesteuert werden. Die Reaktionszeit der Vibrationseinrichtung 29 beträgt etwa 20ms. Das elektromagnetische Feld ist jedenfalls derart schwach, dass keine wesentlichen Störungen bzw. Beeinträchtigungen hervorgerufen werden, insbesondere bezüglich Herzschrittmachern, Hörgeräten oder dergleichen.

Die Vibrationseinrichtung 29 kann auch einen Motor mit einem Ungleichgewicht umfassen und der Touchscreen 25 aus einer Folie bestehen, die unmittelbar mit der Vibrationseinrichtung 29 verbunden ist. Die Vibrationseinrichtung 29 kann auch eine bereichsweise Schwingung des Touchscreens 25, durch eine gezielte Anordnung der Vibrationseinrichtungen 29 im Bereich des jeweiligen Schaltelementes 26 oder eine Querschnittsschwächung der Frontplatte 39 bewirken. Zur Erzeugung eines Temperaturreizes ist auch die Anordnung eines Thermoelementes 43 möglich, das spielablaufgesteuert seine Temperatur ändert.

Das Schaltelement 26 nach Fig. 8 ist als Dreh-/Druckschalter 44 ausgeführt, dessen zentrische Achse 45 zumindest abschnittweise als Magnetstab 41 ausgeführt und in der gehäusefesten Spule 42 sowohl verdrehbar als auch axial verlagerbar angeordnet ist. Durch das Zusammenwirken der Spule 42 mit dem Magnetstab 41 ist eine Vibration des Betätigungselementes 28 erzeugbar. Innerhalb des topfförmigen Betätigungselementes 28 ist ein Schrittmotor 46 gehäusefest angeordnet, der mit Magnetpolen 47 im Inneren des Betätigungselementes 28 zusammenwirkt, um das Betätigungselement 28 und damit das Schaltelement 26 zwangsweise zu verdrehen und derart einen höheren oder niedrigeren Widerstand gegen eine Drehbewegung durch den Benutzer zu erzeugen. Eine Drehstellung des Betätigungselementes 28 kann aus der Stellung des Schrittmotors 46 durch eine entsprechende Auswertung seiner Klemmenspannung bei der Verdrehung mittels einer Auswerteeinheit, die in die Spielablaufsteuerung integriert sein kann, abgeleitet werden. Alternativ ist die Anordnung eines Stellungssensors 48 an der Achse 45 des Betätigungselementes 28 möglich, wobei der Stellungssensor 48 ein Druckschaltelement umfassen kann.

Nach Fig. 9 ist das Betätigungselement 28 zumindest bereichsweise aus dem elastischen Werkstoff 19 gefertigt, wobei eine aus einem relativ starren Material hergestellte Betätigungsplatte 48, auch als Dekorelement, vorgesehen sein kann. In den elastischen Werkstoff 18 ist der Magnetstab 41 eingebettet, der in die Spule 42 eingreift. Das Betätigungselement 28 ist randseitig gelagert, wobei umfangsseitig und in axialer Richtung nicht näher dargestellte Kontakte angeordnet sind, damit der Dreh-/Druckschalter 44 realisiert ist. Durch ein hochfrequentes Ansteuern der Spule 42 ist eine Vibration erzeugbar. Alternativ kann der Magnetstab 41 auch zur Stauchung und damit Formänderung des Betätigungselementes 28 im Bereich des elastischen Werkstoffs 19 verlagert werden.

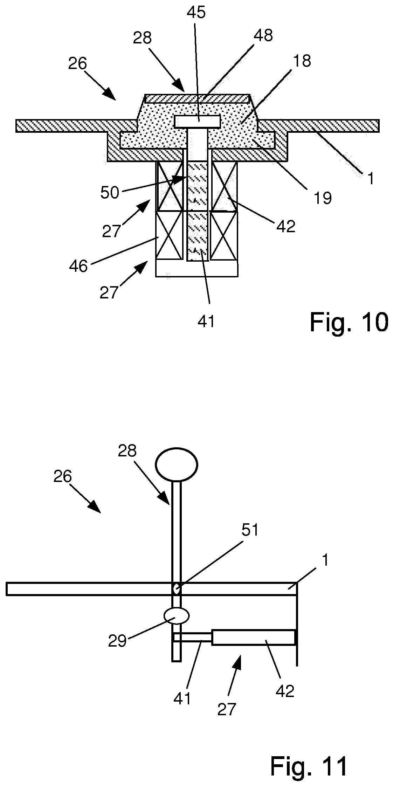

Gemäß Fig. 10 ist das zuvor erläuterte Betätigungselement 28 zusätzlich mit dem Schrittmotor 46 versehen, der zum einen gehäusefest und zum anderen mit der Achse 45 zusammenwirkend angeordnet ist, um das Betätigungselement 28 zu verdrehen, also in seiner Lage zu verändern, oder den Widerstand bei der Verdrehung zu erhöhen, in dem er der Drehung entgegen wirkt, oder den spürbaren Widerstand zu reduzieren, indem er unterstützend wirkt.

Das Schaltelement 26 nach Fig. 11 umfasst das hebelförmige Betätigungselement 28, das in dem Gehäuse 1 in einem Schwenklager 51 verschwenkbar ist und mit nicht dargestellten Schaltkontakten zusammenwirkt. An dem Betätigungselement 28 greift die elektromagnetische Einrichtung 27 an, die den Schwenkwiderstand des Betätigungselementes 28 vergrößert oder verkleinert oder das Betätigungselement 28 in die eine oder andere Richtung verlagert, wenn die Spule 42 entsprechend bestromt und der einerseits in die Spule 42 eintauchende und andererseits mit dem Betätigungselement 28 gekoppelte Magnetstab 41 verlagert wird. An dem mit Spiel gelagerten Betätigungselement 28 ist die einen Motor mit einem Ungleichgewicht umfassende Vibrationseinrichtung 29 angeordnet, die das Betätigungselement 28 in Schwingung versetzt.

Selbstverständlich sind dem Schaltelement 26 entsprechende Schaltkontakte zugeordnet und die elektromagnetische Einrichtung ist sowohl mit einer Spannungsquelle als auch der Spielgerätesteuerung mittels entsprechender elektrischer Leiter verbunden, die aus Gründen der Übersichtlichkeit nicht dargestellt sind.

**Bezugszeichenliste**

| | | | |
|---|---|---|---|
| 1. | Gehäuse | 26. | Schaltelement |
| 2. | Bildschirm | 27. | Einrichtung |
| 3. | Spieleinrichtung | 28. | Betätigungselement |
| 4. | Umlaufkörper | 29. | Vibrationseinrichtung |
| 5. | Symbol | 30. | Beleuchtungsmittel |
| 6. | Ablesefenster | 31. | Finger |
| 7. | Risikoleiter | 32. | Dauermagnet |
| 8. | Risikoleiter | 33. | Eisenscheibe |
| 9. | Zusatzspieleinrichtung | 34. | Hall-Sensor |
| 10. | Anzeigefeld | 35. | Erreger |
| 11. | Totalverlustanzeigefeld | 36. | Drehkörper |
| 12. | Taste | 37. | Motor |
| 13. | Gehäuseabschnitt | 38. | Sensor |
| 14. | Jackpotanzeige | 39. | Frontplatte |
| 15. | Sensorfeld | 40. | Rahmenschenkel |
| 16. | Punktebank | 41. | Magnetstab |
| 17. | Guthabenanzeige | 42. | Spule |
| 18. | Rahmen | 43. | Thermoelement |
| 19. | Werkstoff | 44. | Dreh-/Druckschalter |
| 20. | Anzeige | 45. | Achse |
| 21. | Drucktaste | 46. | Schrittmotor |
| 22. | Münzeinwurfschlitz | 47. | Magnetpol |
| 23. | Geldscheineingabeschlitz | 48. | Betätigungsplatte |
| | | 49. | Anzeigeeinrichtung |
| 24. | Rückgabetaste | 50. | Dauermagnet |
| 25. | Touchscreen | 51. | Schwenklager |

## Patentansprüche

1. Unterhaltungsspielgerät mit einem Gehäuse (1), in dem eine Spielablaufsteuerung, mindestens eine Anzeigeeinrichtung (49) zur Darstellung einer Spieleinrichtung (3) und mindestens ein durch einen Benutzer betätigbares Schaltelement (26) angeordnet sind, wobei das Schaltelement (26) mit der Spielablaufsteuerung in Verbindung steht, und dem als Dreh-, Druck-, Zug- oder Tast-Schalter oder als eine Kombination dieser Schalter ausgebildeten Schaltelement (26) mindestens eine mit der Spielablaufsteuerung gekoppelte, zumindest eine Spule (42) und einen Magnetstab (41) aufweisende elektromagnetische Einrichtung (27) zugeordnet ist, wobei die elektromagnetische Einrichtung (27) bei einer Betätigung des Schaltelementes (26) eine für den Benutzer taktil erfassbare Information in Abhängigkeit des Spielverlaufs bezüglich eines Schaltvorgangs in Form einer Lage- und Formänderung des Schaltelementes (26) erzeugt,
- wobei zur Lage- und Formänderung eines Betätigungselementes (28) des Schaltelements (26) das Betätigungselement (28) zumindest bereichsweise aus einem elastischen Werkstoff (19) gefertigt ist, wobei der Magnetstab (41) der elektromagnetischen Einrichtung (27) zur Veränderung der Form des Betätigungselements (28) in den elastischen Werkstoff (19) eingebettet ist und wobei der Magnetstab (41) sowohl verdrehbar als auch axial verlagerbar in der Spule (42) der elektromagnetischen Einrichtung (27) angeordnet ist.

2. Unterhaltungsspielgerät nach Anspruch 1, wobei die elektromagnetische Einrichtung (27) bei einer Betätigung des Schaltelementes (26) eine für einen Benutzer taktil erfassbare Information in Form einer Vibration oder einer Änderung eines Betätigungswiderstandes erzeugt.

3. Unterhaltungsspielgerät nach einem der Ansprüche 1 bis 2, wobei mittels der elektromagnetischen Einrichtung (27) eine Betätigungsrichtung und/oder Stellung des Betätigungselementes (28) erfassbar ist.

4. Unterhaltungsspielgerät nach einem der Ansprüche 1 bis 3, wobei die als Schrittmotor (46) oder eine Bremse ausgebildete elektromagnetische Einrichtung (27) einen sich erhöhenden oder erniedrigenden Widerstand gegen eine Betätigung des Schaltelementes (26) bewirkt.

5. Unterhaltungsspielgerät nach einem der Ansprüche 1 bis 4, wobei das Betätigungselement (28) des Schaltelements (26) zumindest bereichsweise aus einem Silikon gefertigt ist.

6. Unterhaltungsspielgerät nach einem der Ansprüche 1 bis 5, wobei das Schaltelement (26) oder das Betätigungselement (28) schwingend gelagert oder ausgebildet ist.

7. Unterhaltungsspielgerät nach Anspruch 2, wobei die Vibration in ihrer Intensität veränderbar ist.

8. Unterhaltungsspielgerät nach Anspruch 2 oder 7, wobei die die Vibration erzeugende elektromagnetische Einrichtung (27) einen Dauermagneten (50) und eine erregbare Spule (42) umfasst, wobei der eine Teil der Einrichtung (27) gehäusefest und der andere relativ dazu beweglich an dem in Vibration zu versetzenden Bauteil angeordnet ist.

9. Unterhaltungsspielgerät nach einem der Ansprüche 1 bis 8, wobei dem Schaltelement (26) ansteuerbare Beleuchtungsmittel (30) zugeordnet sind.

## Claims

1. A gaming machine with a housing (1), in which are arranged a game sequence controller, at least one display device (49) for displaying a gaming device (3), and at least one switching element (26), which is actuatable by a user, wherein the switching element (26) is connected to the game sequence controller, and the at least one switching element (26), which is embodied as a rotary switch, a pressure switch, a pull switch, or a pushbutton switch or as a combination of said switches, is assigned at least one electromagnetic device (27), which is coupled to the game sequence controller and comprises at least one coil (42) and a magnetic bar (41), wherein the electromagnetic device (27) generates, upon an actuation of the switching element (26), information that can be detected tactilely by the user in the form of a change of position and shape of the switching element (26) depending on the course of the game with respect to a switching process,
wherein for changing the position and shape of an actuation element (28) of the switching element (26), the actuation element (28) is produced at least regionally from an elastic material (19), wherein the magnetic bar (41) of the electromagnetic device (27) for altering the shape of the actuation element (28) is embedded into the elastic material (19) and wherein the magnetic bar (41) is arranged both rotatably and axially displaceably in the coil (42) of the electromagnetic device (27).

2. The gaming machine according to claim 1, wherein the electromagnetic device (27) generates, upon an actuation of the switching element (26), information that can be detected tactilely by a user in the form of a vibration or a change of an actuation resistance.

3. The gaming machine according to any one of claims 1 to 2, wherein an actuation direction and/or position of the actuation element (28) can be detected by means of the electromagnetic device (27).

4. The gaming machine according to any one of claims 1 to 3, wherein the electromagnetic device (27) embodied as a stepper motor (46) or a brake brings about an increasing or decreasing resistance to an actuation of the switching element (26).

5. The gaming machine according to any one of claims 1 to 4, wherein the actuation element (28) of the switching element (26) is produced at least regionally from a silicone.

6. The gaming machine according to any one of claims 1 to 5, wherein the switching element (26) or the actuation element (28) is mounted or embodied in an oscillating fashion.

7. The gaming machine according to claim 2, wherein the intensity of the vibration is variable.

8. The gaming machine according to claim 2 or 7, wherein the vibration-generating electromagnetic device (27) comprises a permanent magnet (50) and an excitable coil (42), wherein one part of the device (27) is arranged in a housing-fixed manner and the other part is arranged movably relative thereto on the component to be caused to vibrate.

9. The gaming machine according to any one of claims 1 to 8, wherein drivable illumination means (30) are assigned to the switching element (26).

## Revendications

1. Appareil de jeu de divertissement avec un boîtier (1) lequel comprend une commande de déroulement du jeu, au moins un dispositif d'affichage (49) pour afficher une unité de jeu (3) et au moins un élément de commutation (26) pouvant être commandé par l'utilisateur et étant connecté à la commande de déroulement du jeu, (26) qui se présente sous la forme d'un commutateur rotatif, à pression, à tirette ou de contact temporaire ou en combinaison de ces commutateurs, et auquel est assigné au moins un dispositif électromagnétique (27) couplé à la commande de déroulement du jeu et comportant au moins une bobine (42), et le dispositif électromagnétique (27), lors de l'actionnement de l'élément de commutation (26), génère des informations tactilement détectables par l'utilisateur en fonction du cours du jeu par rapport à un processus de commutation sous la forme d'un changement de position et de forme de l'élément de commutation (26),
dans lequel pour le changement de position et de forme d'un élément d'actionnement (28) de l'élément de commutation (26) l'élément d'actionnement (28) est constitué d'un matériau élastique (19) au moins dans certaines zones, la tige magnétique (41) du dispositif électromagnétique (27) étant incorporée dans le matériau élastique (19) pour changer la forme de l'élément d'actionnement (28), et la tige magnétique (41) montée étant susceptible de tourner et de se déplacer axialement dans la bobine (42) du dispositif électromagnétique (27).

2. Appareil de jeu de divertissement selon la revendication 1, dans lequel le dispositif électromagnétique (27), lorsque l'élément de commutation (26) est actionné, génère une information sous la forme d'une vibration ou d'une modification d'une résistance d'actionnement tactilement détectable par un utilisateur.

3. Appareil de jeu de divertissement selon l'une des revendications 1 à 2, dans lequel une direction d'actionnement et / ou une position de l'élément d'actionnement (28) sont détectables au moyen du dispositif électromagnétique (27).

4. Appareil de jeu de divertissement selon l'une des revendications 1 à 3, dans lequel le dispositif électromagnétique (27) conçu comme un moteur pas à pas (46) ou un frein génère une résistance croissante ou réductrice à un actionnement de l'élément de commutation (26).

5. Appareil de jeu de divertissement selon l'une des revendications 1 à 4, dans lequel l'élément d'actionnement (28) de l'élément de commutation (26) est constitué de silicone au moins dans certaines zones.

6. Appareil de jeu de divertissement selon l'une des revendications 1 à 5, dans lequel l'élément de commutation (26) ou l'élément d'actionnement (28) est monté ou réalisé de manière à être basculant.

7. Appareil de jeu de divertissement selon la revendication 2, dans lequel la vibration est variable en intensité.

8. Appareil de jeu de divertissement selon la revendication 2 ou 7, dans lequel le dispositif électromagnétique (27) générant des vibrations comprend un aimant permanent (50) et une bobine stimulable (42), dans lequel une partie du dispositif (27) est montée sur le composant à vibrer de manière solidaire du carter et l'autre à être déplaçable par rapport à celle-ci.

9. Appareil de jeu de divertissement selon l'une des revendications 1 à 8, dans lequel des moyens d'éclairage (30) pouvant être commandés sont assignés à l'élément de commutation (26).
